# FASCICULE DE BREVET EUROPEEN

(11) **EP 1 444 151 B1**
(45) Date de publication et mention de la délivrance du brevet: **15.04.2009**
(21) Numéro de dépôt: 02796326.3
(22) Date de dépôt: 30.08.2002
(51) Int. Cl.: B65G 67/20, B60P 1/38

(54) **DISPOSITIF DE CHARGEMENT ET DECHARGEMENT RAPIDES POUR TRANSPORTS ROUTIERS FERROVIAIRES A TAPIS DE CHARGE ASSISTE PAR VERINS HYDRAULIQUES**
SCHNELLLADE- UND -ENTLADEVORRICHTUNG FÜR STRASSEN-/SCHIENENTRANSPORT MIT EINEM EINEN HYDRAULIKHEBER VERWENDENDEN ZUFUHRFÖRDERBAND
RAPID LOADING AND UNLOADING DEVICE FOR ROAD/RAIL TRANSPORT WITH A FEED BELT CONVEYOR USING A HYDRAULIC JACK

(30) Priorité: 31.08.2001 FR 0111293
(43) Date de publication de la demande: 11.08.2004
(73) Titulaire: Gachet, Thierry, 69600 Oullins (FR)
(72) Inventeur: Gachet, Thierry, 69600 Oullins (FR)
(74) Mandataire: Schmitt, John
(86) Numéro de dépôt international: PCT/FR2002/002965
(87) Numéro de publication internationale: WO 2003/018447

(56) Documents cités:
- DE-U- 20 016 115
- GB-A- 2 059 379
- GB-A- 2 151 586
- US-A- 2 421 128
- US-A- 3 481 647

## Description

Le chargement pour le transport, à l'aide d'un véhicule tel qu'un camion, une remorque, un camion attelé, une semi-remorque, un wagon, des marchandises fractionnées a d'abord été accéléré grâce à l'utilisation de palettes permettant de charger un groupe de marchandise au lieu de marchandises individuelles ; il se fait généralement à l'aide de palettes qui sont standardisées sur la base des multiples d'un module de quatre cents millimètres de large sur six cents millimètres de long qui sont soit des palettes réutilisables soit des palettes à usage unique; une des palettes les plus courantes est la palette dite "SNCF" dont les dimensions sont de 800mm de large sur 1200mm de long; il existe aussi des palettes de 1000mm de large sur 1200mm de long et des palettes carrées de 1200mm de coté; toutes ces palettes sont dites ci-après des "palettes standardisées" et peuvent être chargées dans des camions, des remorques, des conteneurs ou des wagons dont les dimensions sont normalisées pour pouvoir contenir un nombre prédéterminé de palettes identiques; le poids maximum de chaque palette étant déterminé sur la base d'environ une tonne au mètre carré soit une pression moyenne de l'ordre de cent hectopascals; la palette n'appuyant généralement pas sur toute sa surface, la pression au niveau des zones d'appui de la palette peut être de l'ordre de deux cents à quatre cents hectopascals; par exemple un type de camion standard peut contenir vingt quatre palettes "SNCF" occupant une surface au sol rectangulaire théorique de deux cent quarante centimètres de large sur neuf cent soixante centimètres de long, ce qui donne en prenant en compte les jeux une surface de deux mètres quarante cinq centimètres de large sur dix mètres de long; un autre type de camions standard peut contenir trente palettes "SNCF" ce qui représente une surface rectangulaire de deux mètres quarante cinq centimètres de large sur treize mètres cinquante centimètres de long.

Malgré l'emploi de palettes standardisées, le chargement et le déchargement des camions est actuellement une opération encore trop longue qui immobilise les véhicules de longues heures d'autant plus qu'il y a souvent des temps d'attente pour accéder au quai de chargement étant, par exemple, déterminé par la disponibilité des chariots élévateurs utilisés pour la manipulation des palettes. Pour gagner du temps, il a été utilisé des conteneurs mis à disposition sur une remorque et qui sont chargés en temps masqués ; il a été aussi utilisé à la place des conteneurs des remorques interchangeables. Ces modes d'organisation ne peuvent être mis en oeuvre économiquement que dans des cas spécifiques, comme par exemple des transports intégrant une phase de transport maritime pour l'usage des conteneurs ou une entreprise, comme par exemple un constructeur d'automobiles ayant des transports réguliers à effectuer entre plusieurs établissements et qui utilise une flotte de remorques interchangeables.

Le document GB-A- 2 151 586 décrit un véhicule de transport de marchandises comportant un dispositif de chargement et de déchargement grâce à un tapis de charge se déplaçant par translation par des moyens de traction de véhicule et par des moyens de traction de quai.

Le document US-A- 3 481 647 apporte un perfectionnement au dispositif de chargement et de déchargement décrit dans le document susmentionné par une injection d'air entre le tapis de charge et le plancher du véhicule.

Toutefois, ces dispositifs connus ne proposent pas de solution pratique et ne sont pas conçus dans un but de normalisation.

L'objet de l'invention est de proposer un dispositif de chargement et de déchargement de véhicules de transport de marchandises qui puisse être normalisé pour pouvoir être utilisé progressivement par un maximum de transporteurs ; le dispositif proposé pouvant être utilisé ou non suivant que le véhicule de transport et/ou le quai de chargement ou de déchargement est équipé ou non pour mettre en oeuvre le dispositif.

L'invention sera mieux comprise à l'aide de la description suivante se référant aux dessins annexés sur lesquels :
La figure 1 représente une vue schématique en élévation du principe de fonctionnement du dispositif de chargement rapide selon l'invention.
La figure 2 représente une vue en élévation schématique du Dispositif de chargement rapide de la figure 1 dans une version préférée du dispositif de traction.
La figure 3 représente en vue perspective partielle, un dispositif d'aide à la translation d'un tapis de charge selon une première version de l'invention.
La figure 4 représente une coupe du dispositif d'aide à la translation suivant une version préférée de l'invention.
La figure 5 représente une vue perspective partielle d'un plancher de véhicule ou de quai utilisé dans le dispositif d'aide à la translation selon la figure 4.
La figure 6 représente en coupe une variante du dispositif d'aide à la translation selon la figure 4.
La figure 7 représente en coupe un dispositif de traction suivant une première version de l'invention.

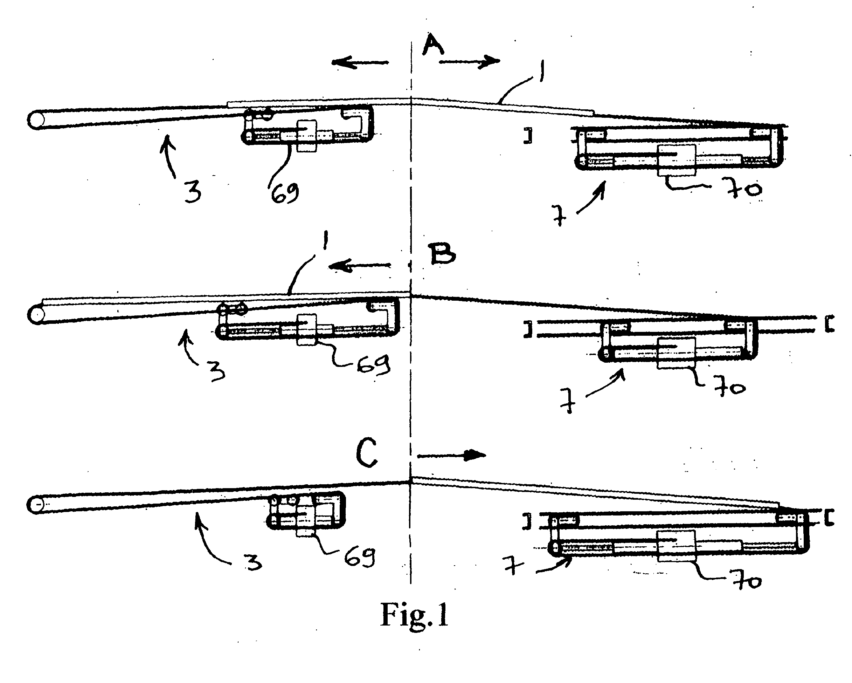

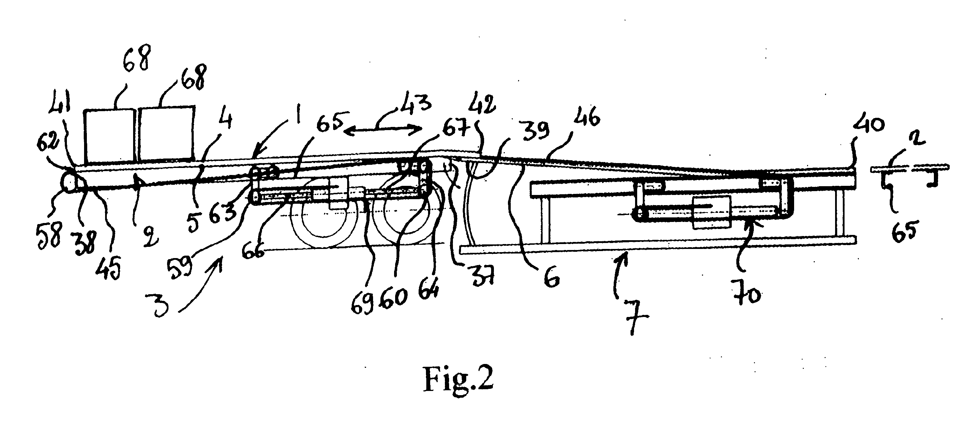

Le dispositif selon l'invention consiste en un tapis de charge 1 (fig.1A), susceptible de supporter de la marchandise fragmentée 68 (fig.2), relié de manière non permanente à des moyens de traction de véhicule 69 et des moyens de traction de quai 70, susceptible d'être déplacé par translation depuis un quai 7 de chargement et de déchargement vers un véhicule 3 (fig.1B) grâce aux moyens de traction de véhicule 69 ou inversement depuis un véhicule 3 vers un quai 7 (fig.1C) grâce aux moyens de traction de quai 70, les mouvements étant facilités par des moyens d'aide à la translation.

Le tapis de charge 1 (fig.2), de forme rectangulaire dont la largeur et la longueur ont sensiblement les dimensions de tout ou partie du plancher de véhicule 2 d'un véhicule de transport 3 ; le tapis de charge 1 comporte une face supérieure 4 en contact avec la charge et une face inférieure 5 d'appui sur les planchers de véhicule 2 et de quai 6 ; le tapis de charge 1 peut recevoir sur sa face supérieure 4, des charges fragmentées 68, jusqu'à ce qu'elles recouvrent la totalité du tapis de charge 1 ; le tapis de charge 1 est lui-même en appui sur sa face inférieure 5, soit sur le plancher de véhicule 2 du véhicule de transport, soit sur un plancher de quai 6 de chargement ou de déchargement de dimensions équivalentes à la surface du plancher de véhicule 2 ; le plancher de quai 6 est de préférence inclinable et disposé de telle manière qu'il puisse être placé dans le prolongement du plancher de véhicule 2 et de manière que le tapis de charge 1 puisse passer de l'un à l'autre par une simple translation dans un plan vertical parallèle à la longueur ou à la largeur.

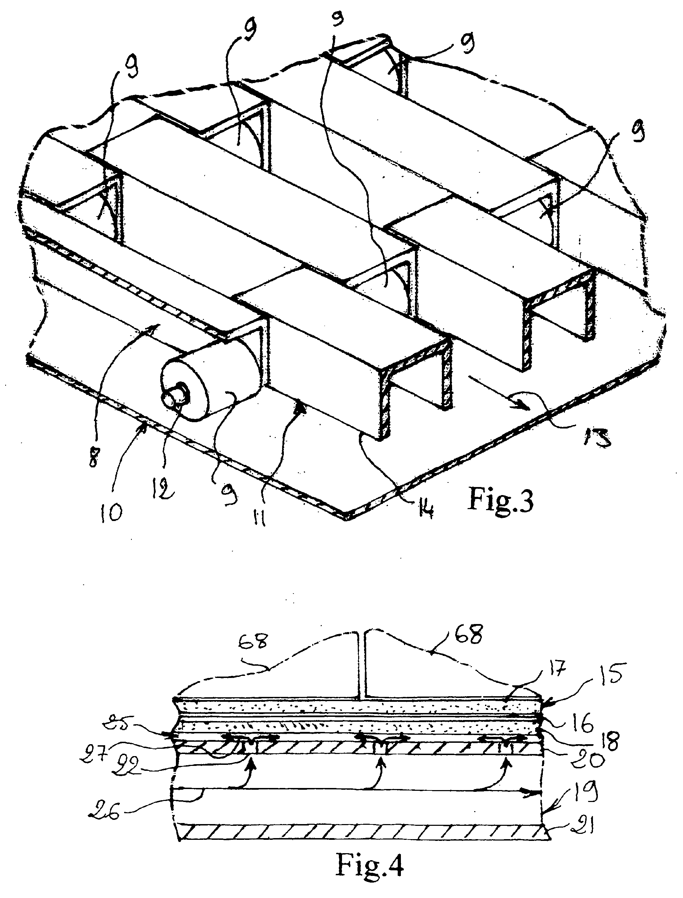

Dans une première version de l'invention, les planchers de véhicule et de quai 10 (fig.3), sont de préférence constitués de tôles d'acier planes et le tapis de charge 8 est métallique et articulé ; il est équipé de galets de roulement 9, constituant un moyen d'aide à la translation, répartis régulièrement sur toute la surface inférieure du tapis de charge 8 de manière à pouvoir rouler alternativement sur les planchers de véhicule et de quai 10 (fig.2) en consommant peu d'énergie ; un tel tapis de charge 8 (fig.3) est, par exemple, constitué de maillons 11 orientés dans le sens du déplacement 13 du tapis de charge 8 ; les maillons 11 sont articulés entre eux par des axes horizontaux 12 et perpendiculaires au sens du déplacement 13, de préférence décalés vers la face inférieure 14 pour pouvoir servi aussi d'axe de rotation pour les galets de roulement 9.

Dans une variante de la première version de l'invention, le tapis de charge roule sur des rouleaux, dont l'axe de rotation est solidaire du plancher de véhicule 2 (fig.2) et du plancher de quai 6 et perpendiculaire à sons sens de déplacement ; ce tapis de charge peut être, par exemple, métallique articulé comme précédemment décrit mais sans comporter de galets ; au lieu d'être métallique et articulé le tapis de charge, roulant sur les rouleaux, peut par exemple, avoir la structure du tapis de charge 15 (fig.4), décrit ci-dessous et qui est, par exemple, analogue à celle d'une bande transporteuse de minerai qui comporte une armature 16 de fibres métalliques et/ou textiles tressées et des faces supérieure et inférieure 17 et 18 recouvertes de caoutchouc.

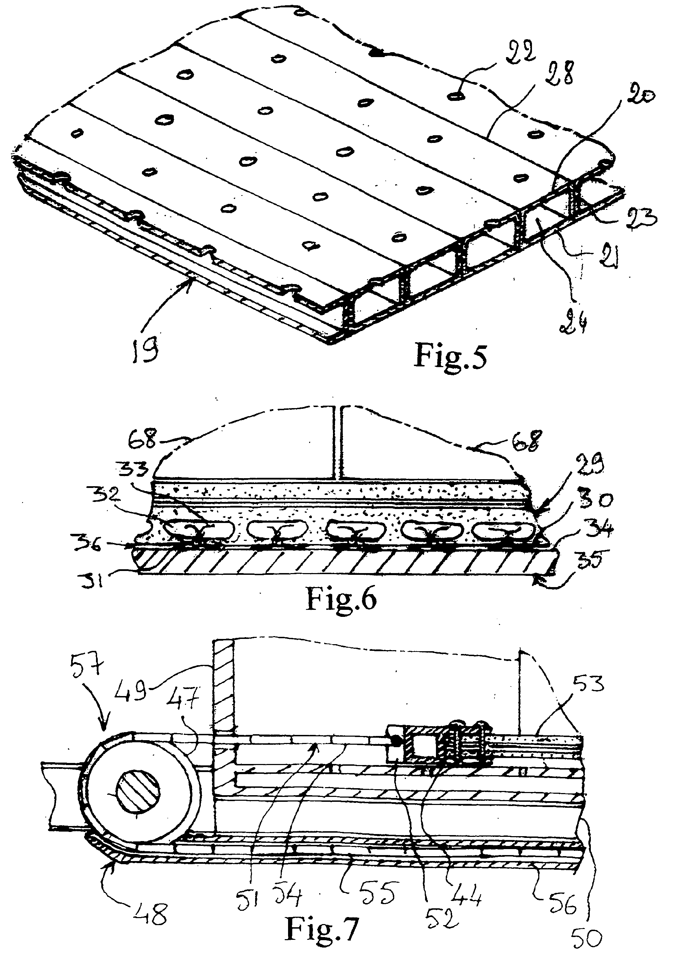

Dans une version préférée de l'invention, le tapis de charge 15 (fig.4) est constitué d'une surface étanche à l'air et s'appuie directement sur les planchers de véhicule ou de quai 19 qui comportent une face supérieure 20 et une face inférieure 21 ; leur face supérieure 20 est constituée, par exemple, de tôles planes percés de buses 22 d'injection d'air comprimé (représenté par les flèches 26 et 27) réparties sur toute la surface des planchers de véhicule ou de quai 19 ; cette répartition des buses 22 est soit uniforme si la répartition des charges sur le tapis de charge 15 n'est pas connue avec certitude, soit plus serrée dans les zones d'appui connues et moins serré entre ces zones, par exemple, la palette "SNCF" représente trois bandes d'appui transversales d'environ dix centimètres de large sur quatre vingt centimètres de long et elle est placée sur le tapis de charge avec sa longueur de mille deux cents millimètres orientée parallèlement à la largeur du tapis de charge de manière que deux palettes placées côte à côte fassent la largeur du tapis de charge ; si le tapis de charge se déplace parallèlement à sa longueur il est nécessaire d'augmenter la densité des buses d'injection d'air suivant six bandes longitudinales d'environ dix centimètres de large ; les buses sont, par.exemple, distantes de cinquante à cent millimètres dans les zones fortement chargées et distantes de cent à deux cents millimètres dans les zones plus faiblement chargées ; le diamètre des buses est de l'ordre d'un demi millimètre à deux millimètres en fonction de la réserve d'air disponible ; pour éviter que les zones peu chargées absorbent la totalité de l'air comprimé disponible, il faut diminuer le diamètre des buses pour pouvoir atteindre simultanément, par exemple, deux à quatre cents hectopascals dans les zones chargées afin de les soulever et, par exemple, moins de cent hectopascals dans les zones peu ou pas chargées. Les tôles planes constituant la face supérieure 20 (fig.5) des planchers de quai ou de véhicule 19 est, par exemple, reliée à leur face inférieure 21 par des entretoises 23 suffisamment serrées pour éviter la déformation de leur face supérieure sous l'effet de la charge et constituent des caissons 24 dans tout ou partie de certains desquels débouchent les buses 22 et qu'il est possible de rendre étanche pour servir de tuyauterie d'alimentation des buses 22 en air comprimé 26 et 27. Au moment du transfert, par l'intermédiaire des moyens de traction 69 et 70 (fig.2), le tapis de charge 15 (fig.4), qui initialement est en contact direct avec le plancher de véhicule ou de quai 19, en est décollé par l'introduction d'air comprimé 26,27, par l'intermédiaire des buses 22 afin de constituer une lame d'air 25 entre le tapis de charge 15 et le plancher de véhicule ou le plancher de quai 19 ; la lame d'air 25 agit comme un lubrifiant qui permet la mise en mouvement et le déplacement rapide du tapis de charge 15 en n'utilisant qu'une force de traction réduite ; une fois que le mouvement du tapis de charge 15 est amorcé, la partie du tapis de charge 15 en mouvement, venant couvrir de nouvelles surfaces de plancher de véhicule ou de quai 19 emprisonne par son déplacement suffisamment d'air entre la face inférieure 18 du tapis de charge 15 et la face supérieure 20 du plancher de véhicule ou de quai 19 pour constituer la lame d'air 25 nécessaire au glissement. Si la qualité de surface de la face supérieure 20 du plancher de véhicule et/ou de quai 19 est insuffisante ou si le tapis de charge 15 a une étanchéité insuffisante, il peut être envisagé d'alimenter en air les buses 22 du plancher défectueux pendant tout le transfert tout en restant dans le domaine de l'invention. Les planchers de véhicule ou de quai 19 (fig.5) peuvent, par exemple, être constitués de planches en profilé d'aluminium 28 qui sont assemblées longitudinalement entre elles. Le tapis de charge 15 peut avoir, par exemple, une structure du type de celui des bandes transporteuses précédemment décrite.

Dans une variante de la version préférée de l'invention, le tapis de charge 29 (fig.6) comporte sur sa face inférieure 30 des perçages 31 qui sont en communication avec des cavités 32 susceptibles d'être alimentées en air comprimé 33 tandis que la face supérieure 34 des planchers de véhicule ou de quai 35 présentent une surface plane et lisse permettant la constitution d'une lame d'air 36 par injection d'air comprimé 33 dans les cavités 30 comme précédemment décrit.

Dans ce qui suit le "coté ouverture" 37 (fig.2) du plancher de véhicule 2 désigne le côté par lequel le tapis de charge 1 est chargé ou déchargé, le "côté fond" 38 du plancher de véhicule 2 désigne le côté opposé au côté ouverture, le "côté véhicule" 39 du plancher de quai 6 désigne le côté par lequel le tapis de charge 1 est chargé ou déchargé du véhicule 3 et le "côté magasin" 40 le côté opposé du plancher de quai 6 par lequel la charge est placée sur ou enlevée du tapis de charge 1, tandis que le tapis de charge 1 comporte une "bordure de chargement" 41 qui est à l'avant du tapis de charge 1 lors du chargement du véhicule 3 et une "bordure de déchargement" 42 qui est à l'avant du tapis de charge 1 lors du déchargement du véhicule 3 ; ces bordures de chargement et de déchargement 41 et 42 sont perpendiculaires aux sens de déplacements 43 du tapis de charge 1; la répartition des efforts de traction sur le tapis de charge est, par exemple, assurée par une barre rigide 44 (fig.7) fixée le long de chaque bordure de chargement et de déchargement 41 et 42 (fig.2).

Le déplacement du tapis de charge 1 (fig.2) est assuré, par exemple, d'une part par au moins une chaîne de chargement 45 qui peut être fixée au tapis de charge 1 à la bordure de chargement 41 qui est manoeuvrée de préférence depuis le véhicule 3 et, d'autre part, par au moins une chaîne de déchargement 46 qui peut être fixée au tapis de charge 1 du côté de la bordure de déchargement 42 et qui est manoeuvrée depuis le quai 7.

Dans une première version de l'invention, un moyen de traction 57 (fig.7) utilise, par exemple, une chaîne de chargement 51 semblable à une chaîne de bicyclette ; un dispositif de manoeuvre 48 de la chaîne de chargement 51 est, par exemple, constitué par au moins un pignon de chargement 47, qui est denté et motorisé, placé côté fond 49 du plancher de véhicule 50 ; une partie de la chaîne de chargement 51 est sous tension et constitue le brin de chargement 54 dont l'extrémité est fixée à la bordure de chargement 52 du tapis de charge 53 et le reste de la chaîne de chargement 51 après avoir contourné le pignon de chargement 47 constitue le brin libre 55 qui est guidé sous le plancher de véhicule 50 dans un fourreau de chargement 56 sensiblement rectiligne orienté vers le côté ouverture du plancher de véhicule 50. Le pignon de chargement 47 est entraîné en rotation, par exemple, par un moteur hydraulique alimenté par un accumulateur hydraulique préalablement chargé par une pompe hydraulique entraînée, par exemple, par un moteur électrique fonctionnant sur le réseau d'alimentation électrique du véhicule.

Le dispositif de manoeuvre de la chaîne de déchargement est, par exemple, semblable au dispositif de manoeuvre de la chaîne de chargement, aussi constitué par au moins un pignon de déchargement, denté motorisé, placé côté magasin du plancher de quai avec un brin de déchargement dont l'extrémité est fixée à la bordure de déchargement du tapis de charge et un brin libre qui est guidé dans un fourreau de déchargement placé sous le plancher de quai, le pignon de déchargement étant, par exemple, aussi entraîné en rotation, par un moteur hydraulique alimenté par un accumulateur hydraulique préalablement chargé par une pompe hydraulique entraînée par un moteur électrique.

Lors du chargement du tapis de charge 53 (fig.7), qui est initialement sur le plancher de quai, la chaîne de chargement 51 est fixée à la bordure de chargement 52 tandis que la chaîne de déchargement est fixée sur la bordure de déchargement (non représentée sur la fig.7) ; le pignon de chargement 47 met sous tension le brin de chargement 54 et entraîne le tapis de charge 53 avec l'assistance des moyens d'aide à la translation précédemment décrits, tandis que le brin libre 55 de la chaîne de changement 51 s'enfile dans le fourreau de chargement 56 ; le brin de déchargement de son côté se dévide entraînant en rotation le pignon de déchargement, dont le moteur hydraulique tourne, par exemple, en circuit fermé avec éventuellement un laminage du fluide hydraulique pour freiner la charge afin d'éviter tout déplacement intempestif du tapis de charge 53 dû à son inertie, tandis que le brin libre se raccourcit. La manoeuvre de déchargement se fait de manière semblable à celle précédemment décrite.

Lorsque le chargement du véhicule est terminé le brin de déchargement est désolidarisé de la bordure de déchargement et reste dévidé sur le plancher de véhicule en attente d'un déchargement de véhicule ou du positionnement d'un tapis de charge vide ; le brin de chargement 54 reste solidaire de la bordure de chargement 52 pendant tout le transport. Lorsque le véhicule est déchargé le brin de chargement 54 de la chaîne de chargement 51 se dévide sur le plancher de véhicule 50 et elle est ensuite désolidarisée de la bordure de chargement 52 et reste dévidée en attente du chargement d'un nouveau tapis de charge ; il est préférable alors de fixer son extrémité à un dispositif de fixation situé au voisinage du côté ouverture du véhicule.

Dans un autre moyen de traction 69, 70, la chaîne de chargement 45 (fig.2) est, par exemple, une chaîne ordinaire formée d'anneaux engagés les uns dans les autres ; le mignon de chargement est remplacé par une poulie de renvoi 58 et, par une moufle, constituant un dispositif de manoeuvre, fonctionnant par écartement de deux jeux de poulies 59 et 60, situés sous le plancher de véhicule 2 ; pour mémoire ce type de moufle est actuellement utilisé dans les chariots élévateurs ; une première extrémité 61 de la chaîne de chargement 45 est fixée au véhicule 3 sous le plancher de véhicule 2, la deuxième extrémité 62 est fixée à la bordure de chargement 41. Lorsque les jeux de poulies 59 et 60 s'écartent l'un de l'autre, d'une première longueur, la chaîne de chargement 45 entraîne en translation le tapis de charge 1 d'une deuxième longueur égale à autant de fois la première longueur qu'il y a de brins joignant les jeux de poulies 59 et 60 ; chaque jeu de poulies 59 ou 60 se déplace en translation de préférence parallèlement au sens de déplacement 43 du tapis de charge 1, à l'aide d'un chariot 63 ou 64 coulissant dans des glissières 65 solidaires du plancher de véhicule 2, chaque chariot 63 ou 64 étant manoeuvré par un vérin simple effet, dans le sens de sortie de la tige de vérin 66 ou 67 correspondante, dont l'extrémité est fixée à un des deux chariots 63 ou 64 et le corps est articulé sur le véhicule les deux vérins simple effet étant en opposition. Lors du chargement du tapis de charge 1 les vérins à simple effet on leur tige 66 ou 67 rentrée, la chaîne de charge 45 est déviée et fixée sur la bordure de chargement 41 ; les vérins simple effet sont alors alimentés en fluide hydraulique à partir d'un accumulateur comme précédemment décrit et se déploient en écartant les chariots 63 et 64 supportant les jeux de poulies 59 et 60 qui tirent sur la chaîne de chargement 45 en même temps que sont mis en oeuvre l'un des moyens d'aide à la translation précédemment décrit. Le même dispositif de manoeuvre peut être utilisé pour le déchargement.

## Revendications

1. Dispositif de chargement et de déchargement d'un véhicule (3) comportant un plancher de véhicule (2,10), tel qu'un camion, une remorque, un camion attelé, une semi-remorque, un wagon, à partir d'un quai (7) pour le chargement ou vers un quai (7) pour le déchargement, ledit quai (7) comportant un plancher de quai (6,10), le chargement et le déchargement étant effectués grâce à un tapis de charge (1,8,15,29,53) se déplaçant par translation grâce à des moyens de traction de véhicule (57,69) et des moyens de traction de quai (70), le tapis de charge (1,8,15,29,53) avec son chargement, initialement positionné sur le plancher de quai (6), étant déplacé par translation depuis le quai (7) vers le véhicule (3) pour le chargement grâce aux moyens de traction de véhicule (57,69), le tapis de charge (1,8,15,29,53) étant déplacé du véhicule (3) vers le quai (7) pour le déchargement grâce aux moyens de traction de quai (70), le déplacement du tapis de charge étant facilité par des moyens d'aide à la translation (9,25,36), **caractérisé en ce que** les planchers de véhicule et de quai (10) sont constitués de tôles d'acier planes et le tapis de charge (8) est métallique et constitué de maillons (11) articulés entre eux et équipés de galets de roulement (9), constituant un moyen d'aide à la translation, répartis régulièrement sur toute la surface inférieure du tapis de charge (8) de manière à pouvoir rouler alternativement sur les planchers de véhicule et de quai (10).

2. Dispositif suivant la revendication 1, **caractérisé en ce que** le tapis de charge (29) comporte sur sa face inférieure (30) des perçages (31) qui sont en communication avec des cavités (32) susceptibles d'être alimentées en air comprimé (33), tandis que la face supérieure (34) des planchers de véhicule et de quai (35) présentent une surface plane et lisse permettant la constitution d'une lame d'air (36) constituant un moyen d'aide à la translation.

3. Dispositif suivant la revendication 1, **caractérisé en ce qu'**un moyen de traction (57) utilise au moins une chaîne de chargement (51) semblable à une chaîne de bicyclette et un dispositif de manoeuvre (48) de la chaîne de chargement (51) qui est constitué par au moins un pignon de chargement (47), denté et motorisé, qui tire sur la partie de la chaîne de chargement (51) reliée à la bordure de chargement (52) du tapis de charge (53), le reste de la chaîne de chargement (51) après avoir contourné le pignon de chargement (47) constituant un brin libre (55) qui est guidé sous le plancher de véhicule (50) dans un fourreau de chargement (56).

4. Dispositif suivant la revendication 3, **caractérisé en ce que** le pignon de chargement (47) est entraîné en rotation par un moteur hydraulique alimenté par un accumulateur hydraulique préalablement chargé par une pompe hydraulique entraînée par un moteur électrique.

5. Dispositif suivant la revendication 1, **caractérisé en ce qu'**un moyen de traction (69,70) utilise une chaîne de chargement (45,46) et une moufle constituant un dispositif de manoeuvre comportant deux jeux de poulies (59,60) qui s'écartent en se déplaçant chacun, à l'aide d'un chariot (63 ou 64), coulissant dans des glissières (65), manoeuvré par la sortie des tiges (66,67) de deux vérins simple effet en opposition.

## Claims

1. A device for loading and unloading a vehicle (3) including the floor of a vehicle (2, 10), such as a truck, a trailer, a coupled truck, a semi-trailer, a wagon, from a loading platform (7) or to an unloading platform (7), said platform (7) including a platform floor (6, 10), with the loading and unloading being performed using a transfer moving walkway (1, 8, 15, 29, 53) moved by translation using vehicle drawing means (57, 69) and platform drawing means (70), the transfer moving walkway (1, 8, 15, 29, 53), together with the load thereon, being initially positioned on the platform floor (6), being moved by translation from the platform (7) towards the vehicle (3) for the loading, using the vehicle drawing means (57, 69), the transfer moving walkway (1, 8, 15, 29, 53) being moved from the vehicle (3) towards the platform (7) for the unloading using the platform drawing means (70), the displacement of the transfer moving walkway being facilitated by translation aid means (9, 25, 36), **characterized in that** the vehicle and platform (10) floors are made up of plane steel sheets and the transfer moving walkway (8) is metallic and made up of articulated links provided with live rollers (9), constituting translation aid means (9), regularly distributed on the whole lower surface of the transfer moving walkway (8) so as to be able to run alternately on the vehicle and platform (10) floors.

2. A device according to claim 1, **characterized in that** the transfer moving walkway (29) includes, on the lower face (30) thereof, bores (31) which communicate with cavities (32) liable to be fed with compressed air (33), whereas the upper face (34) of the vehicle and platform (35) floors have a plane and smooth surface enabling the formation of an air space (36) constituting translation aid means.

3. A device according to claim 1, **characterized in that** drawing means (57) uses at least a loading chain (51) similar to a bicycle chain and a device (48) for operating the loading chain (51), which is made up of at least a toothed and power-driven loading pinion (47), which draws the part of the loading chain (51) connected to the loading edge (52) of the transfer moving walkway (53), with the remainder of the loading chain (51), after by-passing the loading pinion (47), making a free side (55) which is guided under the vehicle (50) floor in a loading sleeve (56).

4. A device according to claim 3, **characterized in that** the loading pinion (47) is driven in rotation by a hydraulic motor powered by a hydraulic accumulator previously loaded by a hydraulic pump driven by an electric motor.

5. A device according to claim 1, **characterized in that** drawing means (69, 70) uses a loading chain (45, 46) and a block constituting an operating device including two sets of pulleys (59, 60) which move away from each other using a carriage (63 or 64) sliding in slides (65), operated by the coming out of the rods (66, 67) of two opposed single-acting jacks.

## Patentansprüche

1. Vorrichtung zum Be- und Entladen eines Fahrzeugs (3), das eine Fahrzeugbühne (2, 10) umfaßt, wie zum Beispiel ein Lastkraftwagen, ein Anhänger, ein Lastkraftwagen mit Kupplungsanhänger, ein Sattelschlepper, ein Waggon ab einem Kai (7) für das Beladen oder zu einem Kai (7) für das Entladen, wobei der besagte Kai (7) eine Kaibühne (6, 10) umfaßt, wobei das Be- und Entladen mit einem Lastförderband (1, 8, 15, 29, 53) durchgeführt wird, das sich durch Translation durch Fahrzeugzugmittel (57, 69) und Kaizugmittel (70) bewegt, wobei das Lastförderband (1, 8, 15, 29, 53) mit seiner Ladung, das ursprünglich auf dem Kaiboden (6) positioniert ist, durch Translation durch Fahrzeugzugmittel (57, 69) ab dem Kai (7) für das Beladen zum Fahrzeug (3) bewegt wird, wobei das Lastförderband (1, 8, 15, 29, 53) vom Fahrzeug (3) für das Entladen durch Kaizugmittel (70) zum Kai (7) bewegt wird, wobei die Verschiebung des Lastförderbandes durch Hilfsmittel zur Translation (9, 25, 36) erleichtert wird, **dadurch gekennzeichnet, daß** die Fahrzeug- und Kaiböden (10) aus ebenem Stahlblech bestehen, und daß das Lastförderband (8) aus Metall besteht und aus Maschen (11) gebildet wird, die gelenkig miteinander verbunden sind und mit Transportrollen (9) ausgerüstet sind, die ein Hilfsmittel zur Translation bilden und gleichmäßig über die gesamte untere Oberfläche des Lastförderbandes (8) verteilt sind, so daß sie abwechselnd auf den Fahrzeug- und den Kaiböden (10) rollen können.

2. Vorrichtung nach Anspruch 1, **dadurch gekennzeichnet, daß** das Lastförderband (29) auf seiner unteren Oberfläche (30) Bohrungen (31) umfaßt, die mit Austiefungen (32) in Verbindung stehen, die mit Druckluft (33) versorgt werden können, während die Oberseite (34) der Fahrzeug- und Kaiböden (35) eine ebene und glatte Oberfläche aufweisen, was die Bildung eines Luftstreifens (36) ermöglicht, der ein Hilfsmittel für die Translation bildet.

3. Vorrichtung nach Anspruch 1, **dadurch gekennzeichnet, daß** ein Zugmittel (57) mindestens eine Lastkette (51) benutzt, die einer Fahrradkette ähnelt, und eine Bedienungsvorrichtung (48) der Lastkette (51), die mindestens aus einem gezahnten Lastritzel (47) mit Motorantrieb besteht, das am Teil der Lastkette (51) zieht, die mit der Ladekante (52) des Lastförderbands (53) verbunden ist, wobei der Rest der Lastkette (51), wenn er das Lastritzel (47) umgangen hat, einen freien Strang (55) bildet, der unter den Fahrzeugboden (50) in eine Lasthülle (56) geführt wird.

4. Vorrichtung nach Anspruch 3, **dadurch gekennzeichnet, daß** das Lastritzel (47) von einem Hydraulikmotor in Drehung versetzt wird, der von einem Druckwasserspeicher gespeist wird, der vorher von einer Hydraulikpumpe geladen wird, die von einem Elektromotor angetrieben wird.

5. Vorrichtung nach Anspruch 1, **dadurch gekennzeichnet, daß** ein Zugmittel (69, 70) eine Lastkette (45, 46) und einen Flaschenzug benutzt, der eine Bedienungsvorrichtung bildet, die zwei Sätze Seilrollen (59, 60) umfaßt, die sich trennen, indem sie sich jeweils mit einem Wagen (63 oder 64) verschieben, der in Gleitschienen (65) läuft und vom Ausgang der Stangen (66, 67) zweier entgegengesetzter Arbeitszylinder mit einfacher Wirkung bedient wird.
